(19) Europäisches Patentamt / European Patent Office / Office européen des brevets

(11) **EP 3 772 288 B1**

(12) **EUROPEAN PATENT SPECIFICATION**

(45) Date of publication and mention
of the grant of the patent:
**03.07.2024 Bulletin 2024/27**

(21) Application number: **20189953.1**

(22) Date of filing: **07.08.2020**

(51) International Patent Classification (IPC):
**A23L 29/262** (2016.01)    **A23C 13/12** (2006.01)
**A23C 13/14** (2006.01)

(52) Cooperative Patent Classification (CPC):
**A23L 29/262; A23C 13/12; A23C 13/14;**
A23C 2210/30

(54) **OIL-IN-WATER TYPE COMPOSITION FOR WHIPPED CREAM**

ZUSAMMENSETZUNG VOM ÖL-IN-WASSER-TYP FÜR SCHLAGSAHNE

COMPOSITION TYPE HUILE DANS L'EAU POUR CRÈME FOUETTÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2019 JP 2019148193**

(43) Date of publication of application:
**10.02.2021 Bulletin 2021/06**

(73) Proprietor: **Shin-Etsu Chemical Co., Ltd.
Tokyo 100-0004 (JP)**

(72) Inventors:
• **SUDO, Takane**
  **Joetsu-shi, Niigata 9428601 (JP)**
• **YAMAMOTO, Atsushi**
  **Osaka, Osaka-shi 5500002 (JP)**
• **NARITA, Mitsuo**
  **Joetsu-shi, Niigata 9428601 (JP)**

(74) Representative: **Schulz Junghans
Patentanwälte PartGmbB
Großbeerenstraße 71
10963 Berlin (DE)**

(56) References cited:
EP-A1- 3 219 734      EP-A1- 3 449 738
WO-A1-2014/063327     WO-A1-2014/184134
JP-A- 2007 189 950    KR-A- 20140 065 177
US-A1- 2007 071 874   US-A1- 2014 234 521

• HUC-MATHIS D ET AL: "Multiscale evaluation
from one bubble to the foam of surface active
properties of cellulose derivatives used for a
starchy model sponge cake", FOOD
HYDROCOLLOIDS, ELSEVIER BV, NL, vol. 71, 10
May 2017 (2017-05-10), pages 129-140,
XP085094493, ISSN: 0268-005X, DOI:
10.1016/J.FOODHYD.2017.03.038

**Description**

Technical Field

The present invention relates to an oil-in-water type composition for whipped cream.

Background Art

Whipped cream is widely used as a topping for cakes, puddings, mousses and other desserts. Whipped cream is classified roughly into fresh animal creams comprised of milk fat from milk (cow milk) and other animal milks, and synthetic vegetable creams obtained by using vegetable fat in place of some or all of milk fat, adding other materials such as skimmed milk, a skimmed milk powder, an emulsifying agent and a flavor to the vegetable fat, and mixing them.

On the other hand, in recent years, demand for low-sugar foods has been growing due to increasing in consumer health awareness and the like. Locavo (registered trademark), which advocates moderate carbohydrate restriction, recommends limiting the amount of sugar in between-meal snacks a day to 10 grams or less. Specifically, it is desirable that in sweets with a large amount of sugar, the amount of sugar contained in whipped cream decreases since whipped cream is used for the dough and topping of sweets.

However, when a whipped cream has a small amount of sugar, such a whipped cream causes a lot of problems that not only having lighter mouthfeel, but also having undesired water separation as well as deteriorated stability and appearance in foam. In order to solve the problems, for example, Patent Document 1 suggests a stabilizing agent for whipped cream comprised of a fermented cellulose which is a cellulose derived from microorganisms, carboxymethyl cellulose (CMC), guar gum or xanthan gum, and dextrin, as well as a whipped cream obtained by mixing the above stabilizing agent with a commercially available whipped cream mix and whipping the mixture.

Patent Document 2 discloses a whippable topping composition containing two types of HPMC, but fails to disclose any methods of producing the two types of HPMC.

Patent Document 3 discloses the use of high acyl gellan in whipping cream, but has no disclosure regarding the physical or chemical properties of HPMC mentioned therein.

Patent Document 4, Patent Document 5, and Patent Document 6 disclose HPMC manufactured by SAMSUNG, but are silent regarding any properties of HPMC, such as viscosity, DS and MS.

Patent Document 7 discloses a whipped cream stabilizer containing hydroxypropylcellulose, microcrystalline cellulose and carrageenan, but has no disclosure regarding the physical or chemical properties of HPMC mentioned therein.

Patent Document 8 discloses five types of HPMC (Benecel MP333C, MP874, MP043, MP843, and MP943) which have the viscosity of 2.0 wt% aqueous HPMC solution at 20°C of 3,600 mPa*s to 200,000 mPa*s.

Citation List

Patent Documents

 Patent Document 1: JP 2013-13393 A
 Patent Document 2: WO2014/063327 A1
 Patent Document 3: WO 2014/184134 A1
 Patent Document 4: KR 2014-0065177
 Patent Document 5: US 2014/0234521 A1
 Patent Document 6: EP 3 449 738 A1
 Patent Document 7: JP 2007-189950 A
 Patent Document 8: US 2007/071874 A1

Summary of the Invention

Problems to be Solved by the Invention

However, although the whipped cream described in Patent Document 1 shows an improvement in the water separation, the stability of foam in the whipped cream is not sufficient.

Accordingly, it is an objective of the present invention to provide a composition used for producing a whipped cream which can have improved water separation while maintaining moderate overrun, and which further can stably retain air bubbles in the whipped cream. A solution to this problem underlying the present invention is presented by the subject-matter of the present claims.

Means of Solving the Problems

In the course of extensive efforts to find a way to solve the above-identified problems, the present inventors have found that hydroxypropyl methylcellulose (hereinafter referred to also as "HPMC") having a ratio of interfacial elastic modulus to interfacial viscous modulus of 2.0 to 3.5 can be used to obtain an oil-in-water type composition for whipped cream used for producing a whipped cream having improved water separation, moderate overrun, and favorable foam. Furthermore, surprisingly, the resulting whipped cream has favorable mouthfeel and rich flavor, and thus has desirable palatability. In addition, the resulting whipped cream has improved gloss and dispensability, and thus looks better in appearance. In the case where the oil-in-water type composition for whipped cream contains a sweetener, the present inventors has found that when foamed, the composition can suppress excessive increase in overrun, and significantly reduce water separation of the resulting whipped cream. Based on the above findings, the present inventors have successfully invented an oil-in-water type composition for whipped cream that contains hydroxypropyl methylcellulose having a ratio of interfacial elastic modulus to interfacial viscous modulus of 2.0 to 3.5. As such, the present invention has been completed based on the findings and successful examples obtained first by the present inventor.

According to the present invention, there is provided an oil-in-water type composition for whipped cream in the following aspects:

[1] an oil-in-water type composition for whipped cream, comprising hydroxypropyl methylcellulose, an oil, a non-fat milk solid and water, wherein the hydroxypropyl methylcellulose is characterized in that the ratio of interfacial elastic modulus to interfacial viscous modulus is from 2.0 to 3.5 when measured with a tensiometer at 25°C using a 0.2% by mass aqueous solution, the viscosity of 2.0 wt% aqueous HPMC solution at 20°C is from 5.5 mPa.s to 500,0 mPa.s, the degree of substitution with methoxy groups per unit of anhydrous glucose is from 1.60 to 1.95, and the molar substitution with hydroxypropoxy groups per mole of anhydrous glucose is from 0.10 to 0.60.

[2] the composition according to [1], wherein the hydroxypropyl methylcellulose is characterized by a viscosity of the hydroxypropyl methylcellulose being in a range between 6.0 mPa · s to 100.0 mPa · s, more preferably from 6.3 mPa·s to 100.0 mPa·s, still more preferably from 6.3 mPa·s to 60.0 mPa·s when measured with a viscometer at 20°C using a 2% by mass aqueous solution.

[3] the composition according to [1] or [2], further comprising a sweetener.

[4] the composition according to any one of [1] to [3], wherein the hydroxypropyl methylcellulose is characterized by an interfacial viscous modulus of the hydroxypropyl methylcellulose being in a range between 5.0 mN/m and 35.0 mN/m, particularly 10.0 mN/m to 30.0 mN/m, more particularly 15.0 mN/m to 25.0 mN/m.

[5] the composition according to any one of [1] to [4], wherein the hydroxypropyl methylcellulose is characterized by an interfacial elastic modulus of the hydroxypropyl methylcellulose being in a range between 10.0 mN/m and 210.0 mN/m , particularly 20.0 mN/m to 140.0 mN/m, more particularly 30.0 mN/m to 105.0 mN/m.

[6] the composition according to any one of [1] to [5], wherein the hydroxypropyl methylcellulose is characterized by a ratio of interfacial elastic modulus to interfacial viscous modulus of the hydroxypropyl methylcellulose when measured with a tensiometer at 25°C using a 0.2% by mass aqueous solution being 3.0 to 3.5.

[7] the composition according to any one of [1] to [6], wherein the molar substitution with hydroxypropoxy groups per mole of anhydrous glucose in said hydroxypropyl methylcellulose is0.15 to 0.35.

[8] the composition according to any one of [1] to [7], wherein the amount of said hydroxypropyl methylcellulose in said composition is from 0.001 wt% to 10.0 wt%, particularly from 0.001 wt% to 2.0 wt%, more particularly from 0.05 wt% to 0.5 wt%.

[9] the composition according to any one of [1] to [8], wherein the amount of said oil in said composition is from 0.5 wt% to 60.0 wt%, particularly from 10.0 wt% to 50.0 wt%, more particularly from 20.0 wt% to 40.0 wt%.

[10] the composition according to any one of [1] to [9], wherein the amount of said non-fat milk solid in said composition is from 2.50 wt% to 7.00 wt%, particularly from 3.00 wt% to 6.00 wt.

Effects of the Invention

According to the present invention, a whipped cream can be obtained, which has improved water separation, maintains moderate overrun, and foam stability of the whipped cream. The whipped cream is also expected to have favorable mouthfeel and rich flavor thereby having desirable palatability, and further to have improved gloss and dispensability thereby looking better in appearance.

In the case where the oil-in-water type composition for whipped cream according to one embodiment of the present invention contains a sweetener, the resulting whipped cream can have water separation reduced.

Description of Embodiments

While an oil-in-water type composition for whipped cream that form one embodiment of the present invention will now be described in detail, the present invention may take various forms to the extent that its objective can be achieved.

Unless otherwise specified, each term used herein is used in the meaning commonly used by those skilled in the art and should not be construed to have any meaning that is unduly limiting. Also, any speculations and theories herein are made on the basis of the knowledge and experiences of the present inventors and as such, the present invention is not bound by any such speculations and theories.

The terms used herein and also used in "Ministerial Ordinance on Milk and Milk products Concerning Compositional Standards, etc." (Japanese Ministry of Health, Labor and Welfare Ordinance No. 106, 2018, also referred to as "Milk and etc. ordinance," hereinafter) are construed as described in the Milk and etc. ordinance.

The term "and/or" as used herein means either any one of, any combination of two or more of, or combination of all of listed related items.

The term "content" as used herein is equivalent to "concentration" and means the proportion of a component relative to the total amount of a composition containing the component. Unless otherwise specified, the unit of content herein indicates % by mass or "wt%." It should be noted, however, that the total amount of the contents of components do not exceed 100 wt%.

The wording "to" for indicating a range of values is intended to include values preceding and following the symbol; for example, "0 wt% to 100 wt%" means a range from 0 wt% or more and 100 wt% or less.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

The composition in one embodiment of the present invention comprises at least hydroxypropyl methylcellulose, an oil, a non-fat milk solid and water, wherein a ratio (E'/E") of interfacial elastic modulus (E') to interfacial viscous modulus (E") of the hydroxypropyl methylcellulose is from 2.0 to 3.5 when measured with a tensiometer at 25°C using a 0.2% by mass aqueous solution.

After repeated trials and failures, the present inventors have directed their attention to the interfacial viscous modulus (E") and the interfacial elastic modulus (E') of an aqueous solution of HPMC. The interfacial viscous modulus (E") corresponds to an index of viscosity term in viscoelasticity of an aqueous solution of HPMC. The interfacial elastic modulus (E') corresponds to an index of elasticity term in viscoelasticity of an aqueous solution of HPMC. It is believed that in relation to continuous bubbles generated continuously from a composition containing HPMC, the interfacial elastic modulus (E') affects the elasticity (hardness) of the foam surface while the interfacial viscous modulus (E") affects the viscosity (buffering force) of the foam surface. Surprisingly, when the oil-in-water type composition for whipped cream containing HPMC having a ratio (E'/E") of interfacial elastic modulus (E') to interfacial viscous modulus (E") of 0.2 wt% aqueous solution at 25°C of 2.0 to 3.5 is foamed, the whipped cream having the following properties is obtained: having foam stability in continuous bubbles; feeling gloss and rich flavor; and having desirable mouthfeel and improved dispensability.

The interfacial viscous modulus (E") and the interfacial elastic modulus (E') of 0.2 wt% aqueous HPMC solution at 25°C can be measured by using Tracker S tensiometer available from Teclis. Preparation of 0.2 wt% aqueous HPMC solution, measurements of the interfacial viscous modulus (E") and the interfacial elastic modulus (E'), and calculation of their ratio (E'/E") are performed as described in Examples below.

The ratio (E'/E") of the interfacial elastic modulus (E') to the interfacial viscous modulus (E") of 0.2 wt% aqueous HPMC solution at 25°C may be any value from 2.0 to 3.5 When the oil-in-water type composition for whipped cream obtained by using HPMC having the E'/E" ratio of less than 2.0 is foamed, the resulting continuous bubbles does not have sufficient foam film stability and are thus susceptible to bursting during or after the generation of the continuous bubbles, so that the resulting whipped cream tends to have less stability.

As long as the ratio (E'/E") of the interfacial elastic modulus (E') to the interfacial viscous modulus (E") of 0.2 wt% aqueous HPMC solution at 25°C is from 2.0 to 3.5, the value of each of the interfacial elastic modulus (E') and the interfacial viscous modulus (E") is not particularly limited. However, the interfacial viscous modulus (E") of 0.2 wt% aqueous HPMC solution at 25°C is preferably from 5.0 mN/m to 35.0 mN/m, more preferably from 10.0 mN/m to 30.0 mN/m, and still more preferably from 15.0 mN/m to 25.0 mN/m in terms of foamability and foam film equilibrium of the open air foam formed by foaming the oil-in-water type composition for whipped cream. The interfacial elastic modulus (E') of 0.2 wt% aqueous HPMC solution at 25°C is preferably from 10.0 mN/m to 210.0 mN/m, more preferably from 20.0 mN/m to 140.0 mN/m, and still more preferably from 30.0 mN/m to 105.0 mN/m in terms of foam film stabilization of the continuous bubbles formed by foaming the oil-in-water type composition for whipped cream.

It is preferable that HPMC has advantageous properties as a component of the oil-in-water type composition for whipped cream. For example, the viscosity of 2.0 wt% aqueous HPMC solution at 20°C is from 5.5 mPa·s to 500.0 mPa s, preferably from 6.0 mPa·s to 100.0 mPa s, more preferably from 6.3 mPa·s to 100.0 mPa s, and much more preferably from 6.3 mPa·s to 60.0 mPa·s in terms of sufficient foamability of the oil-in-water type composition for whipped cream and sufficient foam stabilization of the continuous bubbles generated.

The viscosity of 2.0 wt% aqueous HPMC solution at 20°C is a value measured using a Ubbelohde-type viscometer according to "1. Method I Viscosity measurement by capillary tube viscometer" in the Viscosity Determination in General Tests described in Japanese Pharmacopoeia, 17th edition, as described in Examples below.

The DS of methoxy groups in HPMC is from 1.60 to 1.95 in terms of the compatibility with oil. "DS" of methoxy groups in HPMC represents a degree of substitution, which is the average number of methoxy groups per unit of anhydrous glucose.

The MS of hydroxypropoxy groups in HPMC is from 0.10 to 0.60. The MS of hydroxypropoxy groups in HPMC is preferably from 0.15 to 0.35 in terms of the compatibility with oil. "MS" of hydroxypropoxy groups in HPMC represents a molar substitution, which is the average number of moles of hydroxypropoxy groups per mole of anhydrous glucose.

DS of methoxy groups and MS of hydroxypropoxy groups in HPMC are the values determined by converting the values measured by the measurement method for Hydroxypropyl Methylcellulose described in Japanese Pharmacopoeia, 17th edition.

As long as HPMC that a ratio (E'/E") of the interfacial elastic modulus (E') to the interfacial viscous modulus (E") is from 2.0 to 3.5 when measured with a tensiometer at 25°C using a 0.2% by mass aqueous solution can be obtained, HPMC can be obtained by any method that is not particularly limited. Such HPMC can be produced by, for example, an HPMC production method, including at least bringing pulp into contact with an alkali metal hydroxide solution to obtain alkali cellulose; conducting an etherification reaction using the alkali cellulose, a methylating agent and a hydroxypropylating agent to obtain a crude product of HPMC; washing the crude product of HPMC to obtain washed HPMC; and simultaneously pulverizing and drying the washed HPMC using a gas flow impact type pulverizer to obtain powdered HPMC (wherein the method also includes subjecting the alkali cellulose, the crude product of HPMC and/or the powdered HPMC to a depolymerization process). The above-illustrated method will now be described in detail.

First, pulp is brought into contact with an alkali metal hydroxide solution to obtain alkali cellulose.

Examples of the pulp include cellulose pulp such as wood pulp and linter pulp and the like.

Examples of the alkali metal hydroxide solution include aqueous solutions of alkali metal hydroxides, such as an aqueous sodium hydroxide solution and an aqueous potassium hydroxide solution.

Preferably, the concentration of the alkali metal in the alkali metal hydroxide solution is from 10 wt% to 60 wt% in terms of economics and ease of handling.

While the amount of the alkali metal hydroxide solution employed may be properly determined based on the DS of methoxy groups and the MS of hydroxypropoxy groups of HPMC to be produced, the amount is preferably from 0.30 parts by mass to 3.00 parts by mass with respect to the unit parts by mass (i.e., 1.00 parts by mass) of pulp.

The contact of the pulp and the alkali metal hydroxide solution may be achieved by using, for example, a reactor equipped with an internal stirrer.

When required, the alkali cellulose may be subjected to depolymerization by oxygen before being subjected to the subsequent etherification reaction to obtain depolymerized alkali cellulose.

Oxygen may be supplied, for example, by passing an air stream through the reactor.

While the amount of oxygen supplied may be properly determined depending on the viscosity of desired HPMC, the reaction temperature and the reaction time during the depolymerization, the amount of oxygen already present in the reactor prior to the supply of oxygen and other conditions, it is preferably 0.1 g or more, and more preferably from 0.5 g to 20 g, per 1 kg of solid components in the pulp.

The solid components in the pulp means components present in the pulp other than water. The solid components in the pulp may include organic substances, such as cellulose, which is the major component, hemicellulose, lignin and resin components, as well as inorganic substances, such as Si components and Fe components.

The solid components in the pulp can be calculated by the dry matter content determined by the Pulps-Determination of Dry Matter Content according to JIS P8203:1998. The dry matter content is the ratio of the mass of sample when dried at 105 ± 2°C so as to reach a constant mass to the mass of sample before dried, and is expressed by wt%.

The reaction temperature for the depolymerization by oxygen is preferably from 20°C to 100°C, more preferably from 30°C to 90°C, and still more preferably from 40°C to 90°C.

While the reaction time for the depolymerization by oxygen may be properly determined depending on the temperature, it is preferably from 5 min to 2 hours.

Next, an etherification reaction using the alkali cellulose, a methylating agent and a hydroxypropylating agent is conducted to obtain a crude product of HPMC.

The methylating agent includes methyl chloride. The hydroxypropylating agent includes propylene oxide.

The used amounts of the methylating agent and the hydroxypropylating agent may be properly determined depending on their respective degrees of substitution (DS) and molar substitutions (MS) in HPMC. Preferably, from 0.5 parts by mass to 3.0 parts by mass of the methylating agent and from 0.05 parts by mass to 3.0 parts by mass of the hydroxypropylating agent are used for 1.0 part by mass of pulp.

The reaction temperature for the etherification reaction is preferably from 40°C to 100°C. The reaction time for the etherification reaction is preferably from 1 hour to 5 hours.

Next, the crude product of HPMC is washed to obtain washed HPMC. The crude product of HPMC may be subjected to a depolymerization process by acid as described below, prior to the washing.

The washing may be performed using water. The temperature of water for the washing is preferably from 85°C to 100°C. The moisture content in the washed HPMC is preferably from 25 wt% to 95 wt% to facilitate removal of impurities and adjustment of the moisture content during the subsequent step. The moisture content in the washed HPMC may be determined according to "Loss on Drying Test" in Japanese Pharmacopoeia, 17th edition.

Next, the washed HPMC is simultaneously ground and dried using a gas flow impact type pulverizer to obtain powdered HPMC.

The moisture content in the washed HPMC for loading onto the gas flow impact type pulverizer is preferably from 25 wt% to 95 wt%, more preferably form 50 wt% to 80 wt%, and still more preferably from 60 wt% to 70 wt%. The moisture content in the washed hydroxypropyl methylcellulose may be determined according to "Loss on Drying Test" in Japanese Pharmacopoeia, 17th edition. If necessary, water may be added to the washed HPMC to adjust the moisture content.

The temperature of the washed HPMC for loading onto the gas flow impact type pulverizer is preferably from 5°C to 60°C, more preferably from 20°C to 30°C. The gas to be supplied to the gas flow impact type pulverizer includes air, nitrogen gas and mixed gases thereof. The gas may be supplied to the gas flow impact type pulverizer by using, for example, a blower. The temperature of the gas to be supplied to the gas flow impact type pulverizer is preferably from 10°C to 160°C, more preferably from 40°C to 140°C, and still more preferably from 60°C to 130°C.

By simultaneously pulverizing and drying using a gas flow impact type pulverizer, powdered HPMC is obtained. The moisture content in the powdered HPMC is preferably from 0.8 wt% to 2.0 wt%. The moisture content in the powdered HPMC may be determined according to "Loss on Drying Test" in Japanese Pharmacopoeia, 17th edition.

If the alkali cellulose and/or the crude product of HPMC are not subjected to the depolymerization process, the resulting powdered HPMC in the above-described method may have a significantly larger viscosity of the 2 wt% aqueous solution at 20°C. In such a case, the resulting powdered HPMC may be subjected to, for example, depolymerization by acid to adjust the viscosity of the 2 wt% aqueous solution at 20°C to a suitable range.

The depolymerization by acid may be performed according to a known method. Examples of the acid include hydrogen halide such as hydrogen chloride. The acid may be used as an aqueous solution, for example. For example, hydrogen chloride may be used as hydrochloric acid (aqueous hydrogen chloride solution). The concentration of hydrogen chloride in the aqueous hydrogen chloride solution is preferably from 1 wt% to 45 wt%.

The amount of acid used is preferably from 0.04 parts by mass to 1 part by mass with respect to 100 parts by mass of HPMC. The reaction temperature for the depolymerization by acid is preferably from 40°C to 85°C. The reaction time for the depolymerization by acid is preferably from 0.1 hours to 4 hours.

After completion of the depolymerization by an acid, the acid may be removed by reducing the pressure inside the reactor, for example. Alternatively, sodium bicarbonate may be added as necessary to neutralize the acid used for depolymerization.

While the amount of HPMC in the oil-in-water type composition for whipped cream is not particularly limited and may be any amount that can allow the whipped cream obtained by foaming the oil-in-water type composition for whipped cream to have improved water separation, to maintain moderate overrun, and further to retain the stable state of cream, the amount is, for example, from 0.001 wt% to 10 wt%. Taking into consideration the foam property and thickening ability of the resulting whipped cream, the amount is preferably from 0.001 wt% to 2.0 wt%, and more preferably from 0.05 wt% to 0.5 wt%.

As long as the oil is commonly used as a component of the oil-in-water type composition for whipped cream, the oil is not particularly limited. The oil may include vegetable oils (vegetable fats), and milk fats derived from milks of animals such as cows and goats.

Non-limited specific examples of vegetable oils include coconut oil, palm oil, soybean oil, canola oil, cottonseed oil, corn oil, sunflower oil, olive oil, safflower oil, kapok oil, palm seed oil, margarines, and shortenings, and may further include their fractionated oils, hydrogenated oils, and transesterified oils.

As long as the amount of the oil in the oil-in-water type composition for whipped cream is an amount commonly used in an oil-in-water type composition for whipped cream, the amount is not particularly limited. The amount is preferably is preferably from 0.5 wt% to 60.0 wt%, more preferably from 10.0 wt% to 50.0 wt%, and still more preferably from 20.0 wt% to 40.0 wt% in terms of favorable palatability and foamability of the resulting whipped cream.

The oil used may be any one of vegetable oils or milk fats, or a combination of two or more of vegetable oils and/or milk fats. The manner in which the oil is obtained is not particularly limited; for example, may include producing according to known methods and obtaining among commercially available products.

The non-fat milk solid is not particularly limited as long as the non-fat milk solid is a solid obtained by removing water and milk fat from cow milk and goat milk. The non-fat milk solid may contain proteins, carbohydrates, minerals, and vitamins usually present in milk.

As long as the amount of the non-fat milk solid in the oil-in-water type composition for whipped cream is an amount commonly used in an oil-in-water type composition for whipped cream, the amount is not particularly limited. The amount is preferably from 2.50 wt% to 7.00 wt%, and more preferably from 3.00 wt% to 6.00 wt% in terms of favorable palatability and foamability of the resulting whipped cream.

The manner in which the non-fat milk solid is obtained is not particularly limited; for example, may include producing according to known methods and obtaining among commercially available products. Since a non-fat milk solid is contained in a variety of dairy products such as skimmed milk powder, non-fat milk, low-fat milk, processed milk, skimmed milk, skimmed and concentrated milk and cream, such dairy products may be used as the non-fat milk solid. The non-fat milk solid may be used either individually or in combination of two or more among the above-listed non-fat milk solids.

The water is not particularly limited and may be any type of water commonly used for the oil-in-water type composition for whipped cream, including, for example, tap water and purified water.

As long as the amount of water contained in the oil-in-water type composition for whipped cream is an amount commonly used in an oil-in-water type composition for whipped cream, the amount is not particularly limited. The amount is preferably from 31.0 wt% to 96.999 wt%, and more preferably from 35.0 wt% to 80.00 wt% in terms of favorable palatability and foamability of the resulting whipped cream.

The oil-in-water type composition for whipped cream may contain other components than HPMC having a ratio (E'/E") of interfacial elastic modulus (E') to interfacial viscous modulus (E") of 0.2 wt% aqueous solution at 25°C of 2.0 to 3.5, an oil, a non-fat solid and water. Preferable examples of other components include a sweetener in terms of favorable stability and water separation of the resulting whipped cream.

The sweetener includes sugars; sugar alcohols, such as maltitol, erythritol, solbitol, palatinit, xylitol, lactitol, and isomaltitol; aspartame, acesulfame potassium, sucralose, alitame, neotame, Kanzo extracts (glycyrrhizin), saccharin, saccharin sodium, stevia extracts, and stevia powder. Sugars include, but are not limited to, sucrose, white sugar, glucose, fructose, isomerized sugar, invert sugar; oligosaccharides, such as isomaltooligosaccharide, reduced xylooligosaccharide, reduced gentiooligosaccharide, xylooligosaccharide, gentiooligosaccharide, nigerooligosaccharide, teandeoligosaccharide, and soybean oligosaccharide; trehalose, starch syrup, reduced starch syrup, and honey.

As long as the amount of the sweetener contained in the oil-in-water type composition for whipped cream is an amount commonly used in an oil-in-water type composition for whipped cream, the amount is not particularly limited. The amount is, for example, from 0.0 wt% to 15.0 wt%. The amount is preferably from 3.0 wt% to 10.0 wt% in terms of favorable stability, palatability and/or water separation of the resulting whipped cream.

The sweetener may be used either individually or in combination of two or more among the above-listed sweeteners. The manner in which the sweetener is obtained is not particularly limited; for example, may include producing according to known methods and obtaining among commercially available products.

If required, the oil-in-water type composition for whipped cream may contain a food material as other components. The food material includes, but is not limited to, dairy products and egg yolk. The dairy products may include milk, homogenized milk, skimmed milk powder, condensed milk, yogurt, cheese, fermented milk, lactic acid bacteria beverage, and milk beverage.

If required, the oil-in-water type composition for whipped cream may contain as other components additive agents such as emulsifying agents, thickening agents, flavors, preservative agents, anti-oxidant agents, vitamins, and minerals. Non-limited specific examples of additive agents will now be described below for illustrative purposes.

The emulsifying agents include monoglyceride fatty acid esters, polyglyceride fatty acid esters, diglyceride fatty acid esters, sorbitan fatty acid esters, and lecithin.

The thickening agents include methyl cellulose, hydroxypropyl cellulose, agar, gelatin, carrageenan, xanthan gum, locust bean gum, gellan gum, and pectin.

The flavors include vanilla flavor and milk flavor.

The preservative agents include sodium methaphosphate, alkali metal salts of citric acid, and alkali metal salts of phosphoric acid.

The anti-oxidant agents include tocopherols and tea extracts.

The vitamins include vitamin $B_1$, ascorbic acid, and pantothenic acid.

The minerals include potassium, sodium, and calcium.

As long as the amount of the additive agents contained in the oil-in-water type composition for whipped cream is an amount that does not prevent the present invention from solving the problems, the amount is not particularly limited. The amount is preferably from 0.0 wt% to 30.0 wt%, and more preferably from 1.0 wt% to 20.0 wt% in terms of favorable stability and palatability of the resulting whipped cream.

The food material and additive agents may be used either individually or in combination of two or more among the above-listed food material and additive agents. The manner in which the food material and additive agents are obtained is not particularly limited; for example, may include obtaining among commercially available products.

The oil-in-water type composition for whipped cream can be produced by mixing HPMC having a ratio (E'/E") of interfacial elastic modulus (E') to interfacial viscous modulus (E") of 0.2 wt% aqueous solution at 25°C of 2.0 to 3.5, an oil, a non-fat milk solid and water, and, if required, any other components such as a sweetener, a food material and additive agents to obtain the oil-in-water type composition for whipped cream.

While the manner in which the components of the oil-in-water type composition for whipped cream are mixed together is not particularly limited, the mixing may be achieved by using a mixer under conditions that do not cause foaming of the composition as vigorous mixing may cause such foaming. However, due to the solubility of HPMC, it is preferred to first mix HPMC with water to obtain an aqueous HPMC solution and subsequently mix the aqueous HPMC solution, an oil, a non-fat milk solid, water, and optional other components. The oil, the non-fat milk solid, and the optional other components may be, as a pre-mixture thereof, commercially available creams and compounds. The temperature in course of mixing the components in producing the composition is preferably from 0°C to 10°C, and more preferably from 0°C to 5°C in terms of favorable stability of the resulting whipped cream. In addition, if required, operations such as pre-emulsification, sterilization and high-pressure pressing may be performed in mixing.

The oil-in-water type composition for whipped cream may be prepared as a packaged oil-in-water type composition for whipped cream packaged and sealed in a container. The container is not particularly limited; for example, packages formed of materials including paper, plastics such as PET and PTP, glass, and metals such as aluminum may be used. The packaged oil-in-water type composition for whipped cream can be sold and distributed by itself as an individual package. The oil-in-water type composition for whipped cream may be sterilized before or after packaging.

The oil-in-water type composition for whipped cream is foamed according to known manners to a whipped cream. For example, a whipped cream which can retain a foamed state can be produced by stirring the oil-in-water type composition for whipped cream so as to hold air with instruments such as a whipping tool and a specific mixer. In addition, when foamed, sugars such as granulated sugar, table sugar and liquid sugar; flavors; and liqueurs may be added.

The whipped cream obtained by foaming the oil-in-water type composition for whipped cream stably retains the state of cream; exhibits a moderate overrun value; and has improved water separation. While the degrees of the stability, the overrun value and the water separation of whipped cream are not particularly limited, for example, the whipped cream obtained by foaming the oil-in-water type composition for whipped cream according to one embodiment of the present invention has a much favorable stability, a more moderate overrun value and/or much improved water separation of whipped cream as compared to whipped creams obtained under the same condition, but by foaming a composition containing HPMC having a ratio of interfacial elastic modulus (E') to interfacial viscous modulus (E") of 0.2 wt% aqueous solution at 25°C of less than 2.0 in place of the HPMC having the ratio of 2.0 to 3.5. Specifically, the whipped cream obtained by foaming the oil-in-water type composition for whipped cream preferably has an overrun value equal to or more than 125 %, and more preferably has an overrun value in a range between 125 % and 150 %.

Examples

While the present invention will now be described in further detail with reference to Synthesis Examples, Examples and Comparative Examples, the present invention is not limited to these Synthesis Examples and Examples.

<Preparation of HPMC>

Synthesis Example 1: Preparation of HPMC-1

1.98 parts by mass of a 49 wt% aqueous sodium hydroxide solution was sprayed onto 1.00 parts by mass of wood pulp (97 wt% solid components) while the materials were stirred in a reactor equipped with an internal stirrer, to obtain an alkali cellulose.

While the materials were stirred at 70°C, air was then passed through the reactor for 70 min to allow the alkali cellulose to react with oxygen in the air to thereby depolymerize the alkali cellulose.

The amount of supplied oxygen was 2.5 g per kg of the solid components in the wood pulp.

After the space inside the reactor was evacuated to -95kPa, 1.60 parts by mass of methyl chloride for methoxy group substitution and 0.21 parts by mass of propylene oxide for hydroxypropoxy group substitution were added to the reactor. The reaction was then carried out at temperature of 60°C to 90°C for 2 hours to obtain a crude product of HPMC.

The crude product of HPMC was then washed with hot water at 90°C to obtain washed HPMC having a moisture content of 50 wt%.

Water was then added to the washed HPMC to obtain cooled HPMC having a moisture content of 65 wt% and having a temperature of 25°C. The cooled HPMC was then loaded onto a gas flow impact type pulverizer. Using a blower, a mixed gas of air and nitrogen at 70°C was sent through the gas flow impact type pulverizer to simultaneously pulverize and dry HPMC, thereby obtaining powdered HPMC-1 having a moisture content of 1.2 wt%.

The gas flow impact type pulverizer was "UltraRotor Type II," manufactured by Altenburger Maschinen Jaeckering GmbH, which has a vertically arranged drive shaft, 16 impact plates acting on a pair of engraved pulverizing tracks, and 7 pulverizing tracks each having a diameter of 0.5 mm, and which doesn't have sieves. The amount of the mixed gas of air and nitrogen was 1,850 m$^3$ per hour (as measured at 70°C), and the rotating speed of the driving shaft was 4,420 min$^{-1}$.

For the resulting HPMC-1, the ratio (E'/E") of interfacial elastic modulus (E') to interfacial viscous modulus (E"), the interfacial viscous modulus (E"), the interfacial elastic modulus (E'), the viscosity of 2.0 wt% aqueous solution at 20°C, DS of methoxy groups, and MS of hydroxypropoxy groups were determined as described below.

Synthesis Example 2: Preparation of HPMC-2

The preparation of alkali cellulose, the etherification reaction, the washing, the pulverizing and drying were carried out in the same manner as in Synthetic Example 1, except that 2.83 parts by mass of a 49 wt% aqueous sodium hydroxide solution was used, alkali cellulose was not depolymerized, 2.13 parts by mass of methyl chloride was used, 0.53 parts by mass of propylene oxide was used, and a mixed gas of air and nitrogen at 120°C was sent through the gas flow impact type pulverizer. This resulted in powdered HPMC having a moisture content of 1.2 wt%. The viscosity at 20°C of 2 wt% aqueous solution of this powdered HPMC was 4,000 mPa s.

12 wt% hydrochloric acid was then sprayed onto the resulting powdered HPMC in such a manner that 0.3 parts by mass of hydrogen chloride was applied to 100 parts by mass of HPMC. The HPMC sprayed with hydrochloric acid was then reacted for 10 min in a rotating glass reactor at a jacket temperature of 80°C for depolymerization.

While maintaining the jacket temperature at 80°C, the pressure was reduced to 60 mmHg (8.0kPa) and left at the pressure for 30 min to evaporate hydrogen chloride and water in the glass reactor.

To the HMPC in the glass reactor, sodium bicarbonate with an amount equivalent to 1/2 moles of the added hydrogen chloride was then added to neutralize HPMC and to thereby obtain HPMC-2.

For the resulting HPMC-2 as described below, the ratio (E'/E") of interfacial elastic modulus (E') to interfacial viscous modulus (E"), the interfacial viscous modulus (E"), the interfacial elastic modulus (E'), the viscosity of 2.0 wt% aqueous solution at 20°C, DS of methoxy groups, and MS of hydroxypropoxy groups were determined.

Synthesis Example 3: Preparation of HPMC-3

The preparation of alkali cellulose, the etherification reaction, and the washing were carried out in the same manner as in Synthetic Example 1, except that 2.83 parts by mass of a 49 wt% aqueous sodium hydroxide solution was used, alkali cellulose was not depolymerized, 2.13 parts by mass of methyl chloride was used, and 0.53 parts by mass of propylene oxide was used. This resulted in washed HPMC having a moisture content of 50 wt%.

Water was then added to the washed HPMC to obtain cooled HPMC having a moisture content of 65 wt% and having a temperature of 25°C. The cooled HPMC was air-dried for 10 hours using a blower to obtain dried HPMC having a moisture content of 1.2 wt%.

The dried HPMC was then loaded onto the gas flow impact type pulverizer used in Synthesis Example 1. Using a blower, a mixed gas of air and nitrogen at 20°C was sent through the gas flow impact type pulverizer to pulverize HPMC, and to thereby obtain powdered HPMC having a moisture content of 1.2 wt%. The viscosity at 20°C of 2 wt% aqueous solution of this powdered HPMC was 4,000 mPa s.

The amount of the mixed gas of air and nitrogen was 1,850 m$^3$ per hour (as measured at 20°C), and the rotating speed of the driving shaft was 4,420 min$^{-1}$.

12 wt% hydrochloric acid was then sprayed onto the resulting powdered HPMC in such a manner that 0.3 parts by mass of hydrogen chloride was applied to 100 parts by mass of HPMC. The HPMC sprayed with hydrochloric acid was then reacted for 70 min in a rotating glass reactor at a jacket temperature of 80°C for depolymerization.

While maintaining the jacket temperature at 80°C, the pressure was reduced to 60 mmHg (8.0kPa) and left at the pressure for 30 min to evaporate hydrogen chloride and water in the glass reactor.

To the HMPC in the glass reactor, sodium bicarbonate with the amount equivalent to 1/2 moles of the added hydrogen chloride was then added to neutralize HPMC and to thereby obtain HPMC-3.

For the resulting HPMC-3 as described below, the ratio (E'/E") of interfacial elastic modulus (E') to interfacial viscous modulus (E"), the interfacial viscous modulus (E"), the interfacial elastic modulus (E'), the viscosity of 2.0 wt% aqueous solution at 20°C, DS of methoxy groups, and MS of hydroxypropoxy groups were determined.

<Measurement of Physical Properties of HPMC>

Physical properties of HPMC were measured for HPMC-1 to 3 prepared in Synthesis Examples 1 to 3, respectively. Methods used for measuring each physical property are described below. The results are shown in Table 1.

[Interfacial viscous modulus (E") and interfacial elastic modulus (E')]

Using a tensiometer ("Tracker S" manufactured by Teclis), the values at 25°C were measured for 0.2 wt% aqueous solution of HPMC as a sample solution.

An amount of HPMC corresponding to 0.6 g of the dried product adjusted for the moisture content was accurately weighed in a jar (diameter: 65 mm, height: 120 mm, volume: 350 ml). To the jar, hot water at 98°C was added to amount to 300.0 g. The jar was capped and the mixture was stirred for 20 min using a stirrer at 350 rpm to 500 rpm until a uniform dispersion was obtained. Subsequently, the dispersion was stirred for 40 min in a water bath at 0°C to 5°C to obtain 0.2 wt% aqueous solution of HPMC as a sample solution.

An 18-gauge needle as a syringe for the rising drop measurement was attached to the tensiometer. The sample measurement unit of the tensiometer was conditioned to 25°C in advance. The prepared 0.2 wt% aqueous solution of HPMC was poured into a measurement cup (diameter: 25 mm, height: 66 mm, rectangular parallelepiped glass container) to the marked line (25 ml), and measurements were started under the following conditions: While the sample measurement unit of the tensiometer was kept constant at 25°C, data were collected over a period of 100 seconds or longer to obtain a sine wave. With the calculation frequency of 100 seconds, the interfacial viscous modulus (E") and the interfacial elastic modulus (E') were determined and E'/E" was calculated.

Measurement conditions for tensiometer:

Period: 10 sec
Active cycles: 5 cycles
Blank cycles: 5 cycles
Injected air: air with a volume of $16.6 \pm 0.5$ mm$^2$
Variation intensity (Amplitude): 0.7 mm$^2$

[Viscosity]

2 wt% aqueous solution of HPMC was prepared in a similar manner to the method of preparing 0.2 wt% aqueous solution of HPMC, and the viscosity at 20°C of 2 wt% aqueous solution of HPMC was measured by using a Ubbelohde-type viscometer according to "1. Method I Viscosity measurement by capillary tube viscometer" in the General Tests "Viscosity Determination" described in Japanese Pharmacopoeia, 17th edition.

[Measurement of DS and MS of cellulose ether]

MS and DS were converted from the results measured according to the quantification method of hypromellose in Japanese Pharmacopoeia, 17th Edition.

[Table 1]

| | Ratio of interfacial elastic modulus (E') to interfacial viscous modulus (E") (E'/E") (-) | Interfacial viscous modulus (E") (mN/m) | Interfacial elastic modulus (E') (mN/m) | Viscosity (mPa · s) | DS (-) | MS (-) |
|---|---|---|---|---|---|---|
| HPMC-1 | 3.2 | 20.0 | 63.8 | 50.0 | 1.78 | 0.16 |
| HPMC-2 | 2.4 | 14.5 | 34.1 | 50.0 | 1.89 | 0.24 |
| HPMC-3 | 1.8 | 14.9 | 26.1 | 6.0 | 1.89 | 0.24 |
| * In table, HPMC represents hydroxypropyl methylcellulose. | | | | | | |

<Production of oil-in-water type composition for whipped cream>

HPMC used as a material was HPMC-1 to -3 prepared in Synthesis Examples 1 to 3. For oil and non-fat solid, a vegetable whipped compound ["Whip Vegetable Fat," containing 40.0 wt% vegetable oil (vegetable fat), 3.50 wt% non-fat solid (non-fat milk solid), 56.5 wt% water (containing additive agents such as stabilizing agents and coloring agents); manufactured by Megmilk Snow Brand] was used. Tap water was used as water. Sucrose ("Mom Brand White Sugar," manufactured by Mitsui Sugar) was used as the sweetener.

Example 1

To 95 g of the vegetable whipped compound, 5 g of the prepared 4.0 wt% aqueous solution of HPMC-1 (5°C) was added, and the mixture was stirred using a magnetic stirrer ("HS-360," manufactured by AS ONE) at 250 rpm to 300 rpm for about 10 min while chilled on ice at 0°C to 5°C. This resulted in an oil-in-water type composition for whipped cream.

The oil-in-water type composition for whipped cream was then transferred to an aluminum bowl and stirred (foamed) using a household hand mixer ("EUPA TSK-937C80," manufactured by Tsannkuen Japan) at 800 rpm so as to become about 90% foamy state while chilled on ice at 0°C to 5°C. This resulted in a whipped cream.

Comparative Example 1

An oil-in-water type composition for whipped cream was produced and a whipped cream was prepared in the same manner as in Example 1, except that HPMC-3 was used in place of HPMC-1.

Example 2

To 90 g of the vegetable whipped compound, 5 g of sucrose and 5 g of the prepared 4.0 wt% aqueous solution of HPMC-1 (5°C) were added, and the mixture was stirred using a magnetic stirrer ("HS-360," manufactured by AS ONE) at 250 rpm to 300 rpm for 30 min until the sucrose dissolved while chilled on ice at 0°C to 5°C. This resulted in an oil-in-water type composition for whipped cream.

A whipped cream was prepared using the resulting oil-in-water type composition for whipped cream in the same manner as in Example 1.

Example 3 and Comparative Example 2

An oil-in-water type composition for whipped cream was produced and a whipped cream was prepared in the same manner as in Example 2, except that HPMC-2 (Example 3) and HPMC-3 (Comparative Example 2) were used in place of HPMC-1, respectively.

<Evaluation of characteristics of whipped cream>

Characteristic properties of whipped cream were evaluated for the whipped creams prepared in Examples 1 to 3 and Comparative Examples 1 to 2. The methods used for evaluating the respective properties are described below. The results of evaluation are shown in Table 2.

[Destabilization time]

Destabilization time of the whipped cream was determined by using a liquid dispersion and stability evaluation system ("TURBISCAN," manufactured by Formulaction).

The system detects a transmitted light and a backscattered light from a sample by scanning a sample tube in vertical direction by light source in a vertical direction of at regular time intervals. TURBISCAN Index (TSI), which is a destabilization index, indicates the degree of change in the sample over time and is automatically calculated by TURBISCAN according to the following formula. In a whipped cream, the destabilization index may reflect changes in the intensity of backscattered light due to foam coalescence, defoaming and drainage. It is evaluated in a manner that the smaller the destabilization index is, the smaller the change is, and the more stable the air bubbles in the whipped cream are. The destabilization time is the time required for the destabilization index to reach 1.0, as calculated below. It was automatically calculated by the liquid dispersion and stability evaluation system (wherein the destabilization index at the time when the air bubbles in the whipped cream began to become unstable was defined to be 1.0.)

The destabilization index (TSI) was measured according to the following conditions. In addition, the whipped cream was squeezed out of a squeezing bag into a glass bottle, and filled with a height equal to or more than 40 mm. As a destabilization index, the value for the entire sample was employed regardless of the part.

$$\text{TSI} = \sum_i \frac{\sum_h |\text{scan}_i(h) - \text{scan}_{i-1}(h)|}{H}$$

(wherein, "h" shows the time of scan, "H" shows the measurement time, "i" shows the number of scan, and "$\text{scan}_i$ (h)" shows the multi-scattered light intensity at the time of scanning.)

Measurement conditions for liquid dispersion and stability evaluation system:

Measurement instrument: specialized glass bottle (inner diameter of 25 mm x height of 55 mm)
Measurement temperature: 10°C
Measurement time: 24 hours
Scanning frequency: every 5 minutes

[Overrun]

Overrun is a percent (%) increase in the volume immediately after foamed and is expressed by the following equation:

$$\frac{(\text{Weight of composition}) - (\text{Weight of whipped cream immediately after foamed})}{(\text{Weight of whipped cream immediately after foamed})} \times 100$$

"Weight of composition" in the equation is obtained by filling an oil-in-water type composition for whipped cream to the brim of a 25 ml plastic bottle (bar bottle, manufactured by AS ONE), and weighing the composition filled. Also, "Weight of whipped cream immediately after foamed" in the equation is obtained by filling a whipped cream immediately after foamed to the brim of a 25 ml plastic bottle (bar bottle, manufactured by AS ONE), leveling off at the brim, and weighing the cream filled.

[Water separation property]

2 g of whipped cream immediately after foamed present in a squeezing bag was placed at the center of a paper filter (a circular filter with a diameter of 11 cm and a weight of 1.2 g, manufactured by ADVANTEC) to form a circle having a diameter of about 3 cm without forming any hollow space. The filter paper was then stored at 5°C for 48 hours.
The outline of water seeping out from the whipped cream into the paper filter was traced with a ballpoint pen. The whipped cream was removed from the filter paper, and the filter paper was dried at 50°C for 10 min using a dryer.
The dried paper filter was cut out along the ballpoint pen trace and the cut-out portion was weighed. The weight of the cut-out portion was converted to area by the following equation, and the water separation property was evaluated.

Water separation property (cm$^2$) = 95.03 cm$^2$ $\times$ (weight of cut-put portion (g)) / 1.2 (g)

<Sensory evaluation of whipped cream>

In a sensory evaluation, the whipped creams prepared in Examples 1 to 3 and Comparative Examples 1 to 2 were evaluated by five panelists for evaluation items of gloss, rich flavor, mouthfeel, and dispensability. Five panelists were asked to score each evaluation item according to the scoring standard described below. The scores of the five panelists were then averaged, and each whipped cream was evaluated according to the following evaluation criteria.

[Evaluation criteria]

"A" indicates average score of 4.0 or higher;
"B" indicates average score of 3.5 or higher and lower than 4.0;

"C" indicates average score of 3.0 or higher and lower than 3.5; and
"D" indicates average score of lower than 3.0.

[Gloss]

Gloss (glossiness) of the whipped creams immediately after foamed was scored by visual inspection.

[Scoring standard]

5 points indicate very glossy;
4 points indicate glossy;
3 points indicate moderately glossy;
2 points indicate no gloss; and
1 point indicates no gloss and very matte.

[Rich flavor]

Rich flavor of the whipped creams was scored by tasting each whipped cream immediately after foamed and determining the degree of thickness (i.e., richness) felt by the tongue.

[Scoring standard]

5 points indicate a very high richness and rich flavor;
4 points indicate a moderate richness and moderately rich flavor;
3 points indicate no rich flavor;
2 points indicate a less richness and no rich flavor; and
1 point indicates no richness and no rich flavor.

[Mouthfeel]

Mouthfeel of the whipped creams was scored by tasting each whipped cream immediately after foamed and determining the texture felt in the mouth by the tongue.

[Scoring standard]

5 points indicate very smooth;
4 points indicate smooth;
3 points indicate plain;
2 points indicate less smooth; and
1 point indicates little smoothness.

[Dispensability]

Dispensability of the whipped creams was scored by visually observing an appearance of whipped cream dispensed from a squeezing bag (PE squeezing bag, mouthpiece; manufactured by Maruzen) filled with the whipped cream immediately after foamed.

[Scoring standard]

5 points indicate smooth and no gaps;

4 points indicate moderately smooth and no gaps;
3 points indicate no gaps;
2 points indicate less smooth and gaps observed; and
1 point indicates less smooth and many gaps observed.

[Table 2]

| | Oil-in-water type composition for whipped cream | | | | | Evaluation of characteristics of whipped cream | | | Sensory evaluation of whipped cream | | | |
|---|---|---|---|---|---|---|---|---|---|---|---|---|
| | HPMC (wt%) | Oil (wt%) | Non-fat solid (wt%) | Water (wt%) | Sweetener (wt%) | Destabilization time (whole/min) | Overrun (%) | Water separation (cm$^2$) | Gloss | Rich flavor | Mouthfeel | Dispensability |
| Example 1 | HPMC-1 [0.2] | Vegetable oil [38.0] | Non-fat solid [3.33] | Water [58.47] | - | 249 | 139 | 20.2 | B | A | A | A |
| Example 2 | HPMC-1 [0.2] | Vegetable oil [36.0] | Non-fat solid [3.15] | Water [55.65] | Sucrose [5.0] | 1543 | 134 | 17.8 | A | B | A | A |
| Example 3 | HPMC-2 [0.2] | Vegetable oil [36.0] | Non-fat solid [3.15] | Water [55.65] | Sucrose [5.0] | 1352 | 144 | 18.2 | A | B | A | B |
| Comparative Example 1 | HPMC-3 [0.2] | Vegetable oil [38.0] | Non-fat solid [3.33] | Water [58.47] | - | 170 | 138 | 21.2 | C | A | C | B |
| Comparative Example 2 | HPMC-3 [0.2] | Vegetable oil [36.0] | Non-fat solid [3.15] | Water [55.65] | Sucrose [5.0] | 858 | 160 | 27.8 | B | D | C | B |
| * In table, HPMC represents hydroxypropyl methylcellulose. | | | | | | | | | | | | |

<Results of evaluation >

Taking into consideration the comparison between Example 1 and Comparative Example 1 that contain no sweetener, when the oil-in-water type composition for whipped cream containing HPMC-1 was used to prepare a whipped cream, the resulting whipped cream had the destabilization time extended, as compared to the whipped cream foamed from the composition containing HPMC-3. Therefore, it was found that the oil-in-water type composition for whipped cream containing HPMC-1 provided a more stable whipped cream.

Furthermore, when the oil-in-water type composition for whipped cream containing HPMC-1 was used to prepare a whipped cream, the resulting whipped cream had improved water separation as well as favorable sensory evaluation such as gloss, mouthfeel and dispensability, as compared to the cream formed from the composition containing HPMC-3.

Therefore, it was found that the oil-in-water type composition for whipped cream containing HPMC-1 provided a whipped cream having favorable stability and desirable palatability.

On the other hand, taking into consideration the comparison among Examples 2 and 3, and Comparative Example 2 that contain a sweetener, when the oil-in-water type composition for whipped cream containing HPMC-1 or HPMC-2 was used to prepare a whipped cream, the resulting whipped cream had the destabilization time extended in a same manner as the compositions that contain no sweetener, as compared to the whipped cream formed from the composition containing HPMC-3. Therefore, it was found that the oil-in-water type composition for whipped cream containing HPMC-1 or HPMC-2 provided a more stable whipped cream.

In addition, when the oil-in-water type composition for whipped cream containing HPMC-1 or HPMC-2 was used to prepare a whipped cream, the resulting whipped cream had favorable sensory evaluation as a whole, as compared to the cream formed from the composition containing HPMC-3. One reason for this is considered that when the oil-in-water type composition for whipped cream containing HPMC-1 or HPMC-2 was used to prepare a whipped cream, the resulting whipped cream suppressed excessively increasing in overrun so that the mouthfeel of the whipped cream was improved.

Furthermore, surprisingly, when the oil-in-water type composition for whipped cream containing HPMC-1 or HPMC-2 was used to prepare a whipped cream, the resulting whipped cream had a reduced water separation property. The reason for this is considered that since HPMC-1 and HPMC-2 have a ratio of interfacial elastic modulus to interfacial viscous modulus equal to or more than 2.0, the foaming of the composition containing HPMC-1 or HPMC-2 did not result in excessively increasing in overrun so that the resulting whipped cream could have a combination of suitable foamability and suitable foam film strength, and have stable air bubbles that are less likely to be combination of foam or drainage, resulting in having a reduced water separation property.

In addition, taking into consideration the comparison between Examples 2 and 3, it was found the higher the ratio of interfacial elastic modulus to interfacial viscous modulus of HPMC used was, the less excessively increasing in overrun became and the better the water separation was, thereby tending to obtain a more stable whipped cream.

From the above results, it was found that regardless of containing sweeteners such as sucrose, the oil-in-water type composition for whipped cream containing HPMC having a ratio of interfacial elastic modulus to interfacial viscous modulus of 2.0 or higher provided a whipped cream having favorable stability and desirable palatability.

Industrial Applicability

According to the oil-in-water type composition for whipped cream according in one embodiment of the present invention, a high-quality whipped cream can be produced. In addition, the oil-in-water type composition for whipped cream that can be widely distributed can be produced and used on industrial scales.

**Claims**

1. An oil-in-water type composition for whipped cream, comprising hydroxypropyl methylcellulose, an oil, a non-fat milk solid and water, wherein the hydroxypropyl methylcellulose is **characterized in that** the ratio of interfacial elastic modulus to interfacial viscous modulus is from 2.0 to 3.5 when measured with a tensiometer at 25°C using a 0.2% by mass aqueous solution, the viscosity of 2.0 wt% aqueous HPMC solution at 20°C is from 5.5 mPa.s to 500,0 mPa.s, the degree of substitution with methoxy groups per unit of anhydrous glucose is from 1.60 to 1.95, and the molar substitution with hydroxypropoxy groups per mole of anhydrous glucose is from 0.10 to 0.60.

2. The composition according to claim 1, wherein the hydroxypropyl methylcellulose is **characterized by** a viscosity of the hydroxypropyl methylcellulose being in a range between 6.0 mPa · s to 100.0 mPa · s, more preferably from 6.3 mPa·s to 100.0 mPa s, still more preferably from 6.3 mPa·s to 60.0 mPa·s when measured with a viscometer at 20°C using a 2% by mass aqueous solution.

3. The composition according to claim 1 or 2, further comprising a sweetener.

4. The composition according to any one of claims 1 to 3, wherein the hydroxypropyl methylcellulose is **characterized by** an interfacial viscous modulus of the hydroxypropyl methylcellulose being in a range between 5.0 mN/m and 35.0 mN/m, particularly 10.0 mN/m to 30.0 mN/m, more particularly 15.0 mN/m to 25.0 mN/m.

5. The composition according to any one of claims 1 to 4, wherein the hydroxypropyl methylcellulose is **characterized by** an interfacial elastic modulus of the hydroxypropyl methylcellulose being in a range between 10.0 mN/m and 210.0 mN/m , particularly 20.0 mN/m to 140.0 mN/m, more particularly 30.0 mN/m to 105.0 mN/m.

6. The composition according to any one of the preceding claims, wherein the hydroxypropyl methylcellulose is **characterized by** a ratio of interfacial elastic modulus to interfacial viscous modulus of the hydroxypropyl methylcellulose when measured with a tensiometer at 25°C using a 0.2% by mass aqueous solution being 3.0 to 3.5.

7. The composition according to any one of the preceding claims, wherein the molar substitution with hydroxypropoxy groups per mole of anhydrous glucose in said hydroxypropyl methylcellulose is0.15 to 0.35.

8. The composition according to any one of the preceding claims, wherein the amount of said hydroxypropyl methylcellulose in said composition is from 0.001 wt% to 10.0 wt%, particularly from 0.001 wt% to 2.0 wt%, more particularly from 0.05 wt% to 0.5 wt%.

9. The composition according to any one of the preceding claims, wherein the amount of said oil in said composition is from 0.5 wt% to 60.0 wt%, particularly from 10.0 wt% to 50.0 wt%, more particularly from 20.0 wt% to 40.0 wt%.

10. The composition according to any one of the preceding claims, wherein the amount of said non-fat milk solid in said composition is from 2.50 wt% to 7.00 wt%, particularly from 3.00 wt% to 6.00 wt.

**Patentansprüche**

1. Eine Zusammensetzung vom Öl-in-Wasser-Typ für Schlagsahne, umfassend Hydroxypropylmethylcellulose, ein Öl, einen fettfreien Milchfeststoff und Wasser, wobei die Hydroxypropylmethylcellulose **dadurch gekennzeichnet ist, dass** das Verhältnis von Grenzflächen-Elastizitätsmodul zu GrenzflächenViskositätsmodul bei Messung mit einem Tensiometer bei 25°C unter Verwendung einer 0.2 Gew.-% wässrigen Lösung bei 2.0 bis 3.5 liegt, die Viskosität von 2.0 Gew.-% wässriger HPMC-Lösung bei 20°C bei 5.5 mPa·s bis 500.0 mPa·s liegt, der Substitutionsgrad mit Methoxygruppen pro Einheit wasserfreier Glucose bei 1.60 bis 1.95 liegt und die molare Substitution mit Hydroxypropoxygruppen pro Mol wasserfreier Glucose bei 0.10 bis 0.60 liegt.

2. Die Zusammensetzung gemäß Anspruch 1, wobei die Hydroxypropylmethylcellulose **dadurch gekennzeichnet ist, dass** die Viskosität der Hydroxypropylmethylcellulose bei Messung mit einem Viskosimeter bei 20°C unter Verwendung einer 2 Gew.-% wässrigen Lösung in einem Bereich zwischen 6.0 mPa s und 100.0 mPa s, vorzugsweise bei 6.3 mPa s bis 100.0 mPa s, noch bevorzugter bei 6.3 mPa s bis 60.0 mPa s liegt.

3. Die Zusammensetzung gemäß Anspruch 1 oder 2, die außerdem einen Süßstoff umfasst.

4. Die Zusammensetzung gemäß einem der Ansprüche 1 bis 3, wobei die Hydroxypropylmethylcellulose **dadurch gekennzeichnet ist, dass** der Grenzflächenviskositätsmodul der Hydroxypropylmethylcellulose in einem Bereich zwischen 5.0 mN/m und 35.0 mN/m, vorzugsweise bei 10.0 mN/m bis 30.0 mN/m, noch bevorzugter bei 15.0 mN/m bis 25.0 mN/m liegt.

5. Die Zusammensetzung gemäß einem der Ansprüche 1 bis 4, wobei die Hydroxypropylmethylcellulose **dadurch gekennzeichnet ist, dass** der Grenzflächen-Elastizitätsmodul der Hydroxypropylmethylcellulose in einem Bereich zwischen 10.0 mN/m und 210.0 mN/m, vorzugsweise bei 20.0 mN/m bis 140.0 mN/m, noch bevorzugter bei 30.0 mN/m bis 105.0 mN/m liegt.

6. Die Zusammensetzung gemäß einem der vorhergehenden Ansprüche, wobei die Hydroxypropylmethylcellulose **dadurch gekennzeichnet ist, dass** das Verhältnis von Grenzflächen-Elastizitätsmoduls zu GrenzflächenViskositätsmodul der Hydroxypropylmethylcellulose bei Messung mit einem Tensiometer bei 25°C unter Verwendung einer 0.2 Gew.-% wässrigen Lösung, bei 3.0 bis 3.5 liegt.

**7.** Die Zusammensetzung gemäß einem der vorhergehenden Ansprüche, wobei die molare Substitution mit Hydroxypropoxygruppen pro Mol wasserfreier Glucose in genannter Hydroxypropylmethylcellulose bei 0.15 bis 0.35 liegt.

**8.** Die Zusammensetzung gemäß einem der vorhergehenden Ansprüche, wobei die Menge der genannten Hydroxypropylmethylcellulose in der genannten Zusammensetzung bei 0.001 Gew.-% bis 10.0 Gew.-%, vorzugsweise bei 0.001 Gew.-% bis 2.0 Gew.-%, noch bevorzugter bei 0.05 Gew.-% bis 0.5 Gew.-% liegt.

**9.** Die Zusammensetzung gemäß einem der vorhergehenden Ansprüche, wobei die Menge des genannten Öls in der genannten Zusammensetzung bei 0.5 Gew.-% bis 60.0 Gew.-%, vorzugsweise bei 10.0 Gew.-% bis 50.0 Gew.-%, noch bevorzugter bei 20.0 Gew.-% bis 40.0 Gew.-% liegt.

**10.** Die Zusammensetzung gemäß einem der vorhergehenden Ansprüche, wobei die Menge des genannten fettfreien Milchfeststoffs in der genannten Zusammensetzung bei 2.50 Gew.-% bis 7.00 Gew.-%, vorzugsweise bei 3.00 Gew.-% bis 6.00 Gew.-% liegt.


**Revendications**

**1.** Composition de type huile dans eau pour crème fouettée, comprenant de l'hydroxypropylméthylcellulose, une huile, un extrait dégraissé du lait et de l'eau, dans laquelle l'hydroxypropylméthylcellulose est **caractérisée en ce que** le rapport du module élastique interfacial sur le module visqueux interfacial va de 2,0 à 3,5 lors de la mesure avec un tensiomètre à 25 °C en utilisant une solution aqueuse à 0,2 % en masse, la viscosité de la solution aqueuse de HPMC à 2,0 % en poids à 20 °C va de 5,5 mPa.s à 500,0 mPa.s, le degré de substitution par des groupes méthoxy par unité de glucose anhydre va de 1,60 à 1,95, et la substitution molaire par des groupes hydroxypropoxy par mole de glucose anhydre va de 0,10 à 0,60.

**2.** Composition selon la revendication 1, dans laquelle l'hydroxypropylméthylcellulose est **caractérisée par** une viscosité de l'hydroxypropylméthylcellulose qui est dans une plage comprise entre 6,0 mPa · s et 100,0 mPa · s, plus préférablement de 6,3 mPa·s à 100,0 mPa s, encore plus préférablement de 6,3 mPa·s à 60,0 mPa·s lors de la mesure avec un viscosimètre à 20 °C en utilisant une solution aqueuse à 2 % en masse.

**3.** Composition selon la revendication 1 ou 2, comprenant en outre un édulcorant.

**4.** Composition selon l'une quelconque des revendications 1 à 3, dans laquelle l'hydroxypropylméthylcellulose est **caractérisée par** un module visqueux interfacial de l'hydroxypropylméthylcellulose qui est dans une plage comprise entre 5,0 mN/m et 35,0 mN/m, en particulier de 10,0 mN/m à 30,0 mN/m, plus particulièrement de 15,0 mN/m à 25,0 mN/m.

**5.** Composition selon l'une quelconque des revendications 1 à 4, dans laquelle l'hydroxypropylméthylcellulose est **caractérisée par** un module élastique interfacial de l'hydroxypropylméthylcellulose qui est dans une plage comprise entre 10,0 mN/m et 210,0 mN/m, en particulier de 20,0 mN/m à 140,0 mN/m, plus particulièrement de 30,0 mN/m à 105,0 mN/m.

**6.** Composition selon l'une quelconque des revendications précédentes, dans laquelle l'hydroxypropylméthylcellulose est **caractérisée par** un rapport du module élastique interfacial sur le module visqueux interfacial de l'hydroxypropylméthylcellulose lors de la mesure avec un tensiomètre à 25 °C en utilisant une solution aqueuse à 0,2 % en masse qui est de 3,0 à 3,5.

**7.** Composition selon l'une quelconque des revendications précédentes, dans laquelle la substitution molaire par des groupes hydroxypropoxy par mole de glucose anhydre dans ladite hydroxypropylméthylcellulose est de 0,15 à 0,35.

**8.** Composition selon l'une quelconque des revendications précédentes, dans laquelle la quantité de ladite hydroxypropylméthylcellulose dans ladite composition va de 0,001 % en poids à 10,0 % en poids, en particulier de 0,001 % en poids à 2,0 % en poids, plus particulièrement de 0,05 % en poids à 0,5 % en poids.

**9.** Composition selon l'une quelconque des revendications précédentes, dans laquelle la quantité de ladite huile dans ladite composition va de 0,5 % en poids à 60,0 % en poids, en particulier de 10,0 % en poids à 50,0 % en poids, plus particulièrement de 20,0 % en poids à 40,0 % en poids.

10. Composition selon l'une quelconque des revendications précédentes, dans laquelle la quantité dudit extrait dégraissé du lait dans ladite composition va de 2,50 % en poids à 7,00 % en poids, en particulier de 3,00 % en poids à 6,00 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013013393 A
- WO 2014063327 A1
- WO 2014184134 A1
- KR 20140065177
- US 20140234521 A1
- EP 3449738 A1
- JP 2007189950 A
- US 2007071874 A1

**Non-patent literature cited in the description**

- 1. Method I Viscosity measurement by capillary tube viscometer. Japanese Pharmacopoeia
- Loss on Drying Test. Japanese Pharmacopoeia
- Viscosity Determination. Japanese Pharmacopoeia